# EUROPEAN PATENT APPLICATION

(11) **EP 2 360 904 A1**
(43) Date of publication of application: **24.08.2011**
(21) Application number: 10425300.0
(22) Date of filing: 17.09.2010
(51) Int. Cl.: H04M 11/04, H04L 29/06, G08B 25/10, H04M 7/00

(54) **Remote management and control system of safety plants and management and control method implemented by means of such a system**

(71) Applicant: AMA S.p.a., 36100 Vicenza (IT)
(72) Inventor: Fasolo Daniele, 36100 Vicenza (IT)
(74) Representative: Iannone, Carlo Luigi

(57) **Abstract**

A remote management and control system (1) of safety plants including a detection and signalling device (2) suitable to be combined with a structure to be protected, management and safety means (3), placed at a prefixed distance from the detection and signalling device (2) with which communicates receiving one or more analogical information signals and transmitting one or more analogical control signals. The remote management and control system (1) object of the invention includes a series of digital communication networks (4) connected with the detection and signalling device (2) and management and safety means (3) through a first simulation and conversion interface (5), interposed between the detection and signalling device (2) and the digital communication networks (4), and a second simulation and conversion interface (6), interposed between the digital communication networks (4) and the management and safety means (3), the two interfaces (5, 6) converting analogical signals into digital signals and vice versa in such a way as to allow a bi-directional communication between the detection and signalling device (2) and the management and safety means (3) through the aforesaid digital communication networks (4).

## Description

The present invention relates to a remote management and control system of safety plants, such as for example alarm systems, sprinkler systems, closed circuit television (CCTV).

The present invention concerns also a method for the remote management and control (or "tele-management" in the telecommunications sector jargon) of safety plants implemented by such a system.

It is well known that a substantial and significant technological change of the telephone lines, which are being transformed from analogical ones to digital ones, has been going on for some time.

In particular, the traditional general telephone network (abbreviated to RTG or, more commonly to PSTN acronym for Public Switched Telephone Network) and ISDN network (acronym for Integrated Services Digital Network), properly converted to analogical line at user's termination, have been phasing out in order to make way for VOIP connections, as well known acronym for Voice Over Internet Protocol.

VOIP connections allow to carry out a phone call exploiting an Internet connection or another dedicated communication network utilizing the IP protocol.

VOIP lines, however, do not allow the transmission of continue sound tones being conceived and designed to transmit voice tones and, then, using for that specific mathematical algorithms which optimize the transition of only the voice in order to reduce the frequency band required for each communication.

Inevitably, with the advent of VOIP telephone networks many telecommunication devices which transmit on analogical PSTN telephone networks and ISDN networks are no longer able to function.

In this case, remote alarm and in general safety systems are no longer able to transmit, on VOIP connections, the alarms by encodings based on DTMF (acronym for Dual-tone multi-frequency) codes and continuous analogical tone, while the operative safety exchanges and/or remote management centres (tele-management) are no longer able to perform the management of the plants themselves since it is based on transmissions using low speed analogical modems (typically FSK, acronym for Frequency Shift Keying, modem).

Therefore, a relevant problem currently persists of allowing to the existing and available telecommunications devices, used for transmission of signals in the traditional general telephone network (PSTN), to operate with new and more modern communication lines, while preserving their operative features (transmission of alarms and tele-management), so as to avoid the definitive stripping thereof, total disposal or substantial modification, with the obvious disadvantages associated with it.

The present invention aims to overcome such a problem of the prior art just complained.

In particular, main purpose of the present invention is to provide a remote management and control system of safety plants which allows remote management of a detection and signalling device, as well as the transmission of any signal, either an alarm or simple information on the status of such a device, exploiting the existing telecommunication devices, used for the transmission over the analogical telephone network nearly superseded.

In other words, primary purpose of the invention herewith included is to implement a remote management and control system of safety plants which allows a bi-directional communication between detection and signalling device and management and control means (typically operative safety exchange and remote management centre) without using the traditional general analogical telephone network but, at the same time, without at all modifying the safety plant and management means themselves used with the such a telephone communication network.

Within such a purpose, it is task of the present invention to give substance to a remote management and control system of safety plants which avoids dismantling, dropping into disuse or appreciably modifying of the devices and electrical and/or electronic appliances typically used through the general analogical telephone communication network for the remote management and control of safety plants.

The aforesaid purposes are achieved through a remote management and control system of safety plants as to claim 1, as hereinafter referred for the sake of brevity.

Other technical features of detail of the remote management and control system of the invention are set forth in the related dependent claims.

Subject of the present invention is also a method for the remote management and control of safety plants as to claim 10, as hereinafter referred for the sake of brevity too.

Additional applicative features of the method for the remote management and control of safety plants object of the current invention are set forth in respective dependent claims.

Advantageously, the system provided by the applicant of the present invention allows to overcome the difficulties of the current state of the art and, in particular, the issue of the tele-management exploiting a digital communication network, without modifying the alarm plant, the yet existing centralized tele-management systems and software: this thanks to the interposition, on one hand, of a first conversion and simulation interface between the digital communication network and detection and signalling device and, on the other hand, of a second simulation and conversion interface between the digital network and operative management and safety means.

Therefore, the innovation brought about by the present invention consists that, in a digital communication network, all the operations are made bi-directional, not only the transmission of alarms, but also the tele-management of the remote safety plant (remote alarm device) without modifying either the remote system itself or tele-management software.

Still advantageously, this averts or at least severely limits the need for dismantling, dropping into disuse or modifying both the safety plant and its devices and software installed on the remote management centre.

Said purposes and advantages, as well as others that will emerge further on, will appear to a greater extent by the following description relating to a preferred embodiment of the remote management and control system of safety plants of the invention, given as an illustrative and indicative, but not limited, example with the help of the attached drawings where:
- figure 1 is an overall schematic view of the remote management and control system of the invention;
- figure 2 is a schematic and partially detailed view of a first part of the system of figure 1;
- figure 3 is a schematic and partially detailed view of a second part of the system of figure 1.

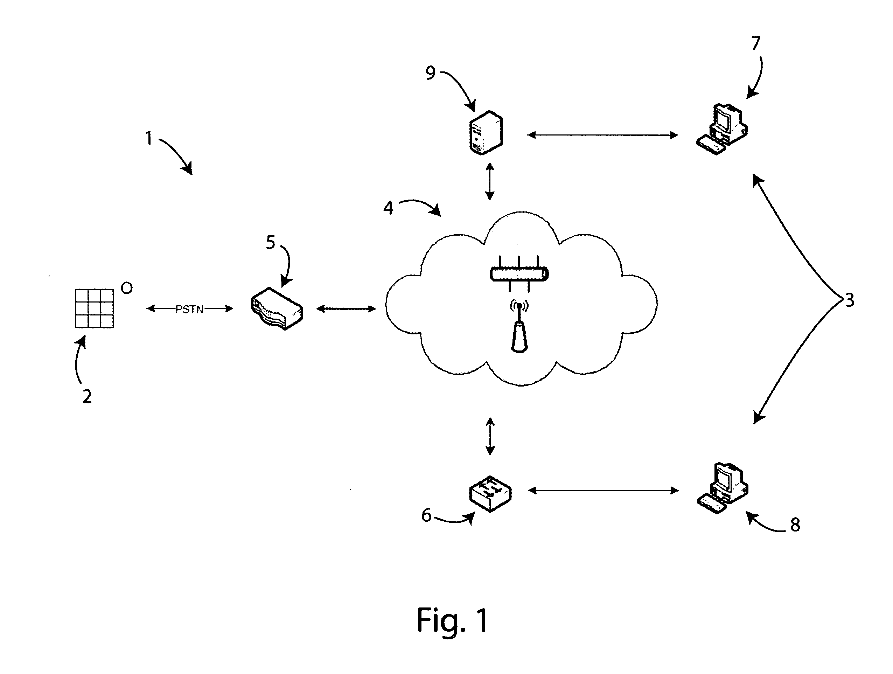

The remote management and control system of safety systems, object of the present invention, is schematically and illustratively shown in figure 1 where it is globally indicated with 1.

As it can be seen, the remote management and control system 1 includes:
- a detection and signalling device 2, which is combined with a structure to be protected, such as a house;
- operative management and safety means, on the whole numbered with 3, placed at a prefixed distance from the detection and signalling device 2 with which communicate receiving one or more analogical information signals and/or transmitting one or more analogical control signal.

According to the invention, the remote management and control system 1 includes a series of digital communication networks, as a whole indicated with 4, which connect the detection and signalling device 2 to the operative management and safety means 3 through a first simulation and conversion interface 5, interposed between the detection and signalling device 2 and digital telephone networks 4, and a second simulation and conversion interface 6, interposed between the digital communication networks 4 and operative management and safety means 3, the first interface 5 and the second interface 6 converting the analogical signals into digital signals and vice versa so as to allow a bi-directional communication between the detection and signalling device 2 and management and safety means 3 through the digital communication networks 4.

More specifically, the operative management and safety means 3 comprise in this case:
- an operative safety exchange 7 which communicates with the detection and signalling device 2 receiving one or more analogical signals of alarm;
- a remote management centre 8, operatively connected with the operative safety centre 7, which communicates with the detection and signalling device 2, receiving one or more analogical information signals and/or transmitting one or more control signals, depending on the circumstances.

Preferably, the operative safety exchange 7 includes a generic digital alarms receiver 9 which receives the alarm signals, converted into digital format, coming from the detection and signalling device 2 and routed by the digital communication networks 4.

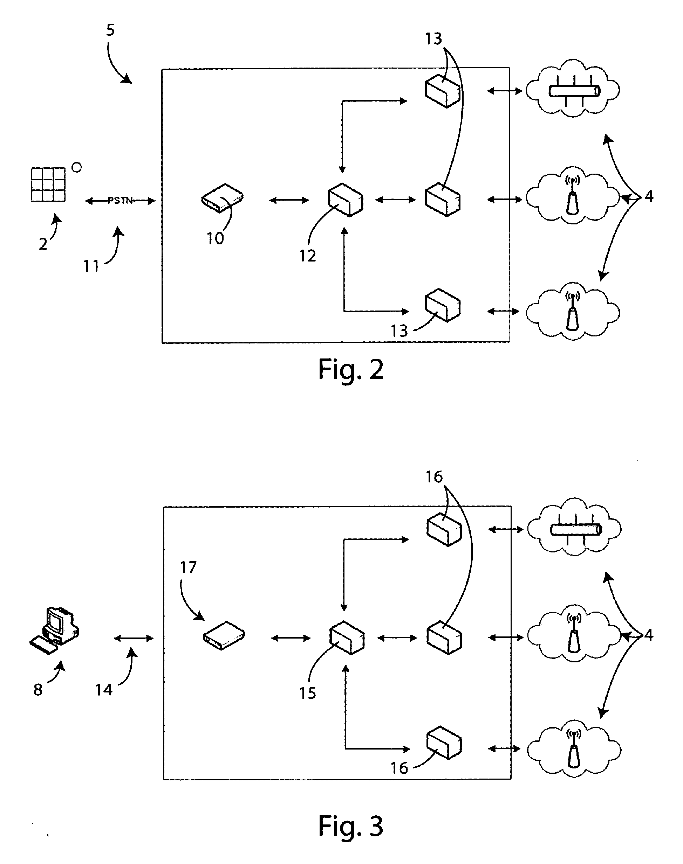

According to the preferred embodiment here described of the invention, the first simulation and conversion interface 5 includes, as it is derived from figure 2:
- a telephone line simulator 10, electrically connected with the detection and signalling device 2 through two electric wires 11 of conventional type;
- a first logic control and processing unit 12, electrically connected upstream with the telephone line simulator 10 and downstream with the digital communication networks 4: such a first logic unit 12 converts the analogical signals into digital signals and vice versa;
- a plurality of first connection terminals or channels 13, interfaced with the respective digital communication networks 4.

The first connection terminals 13 are fewer than the digital communication networks 4, since each of them is suitable for several digital communication networks.

Therefore, the first interface 5 towards the detection and signalling device 2 contains:
- the circuitry to simulate the analogical line (telephone line voltage, DTMF tones, continuous tones and various telephone tones, call circuit): such a circuitry allows to transmit and receive at analogical modem mode, the same mode which is used to perform the remote tele-management of the safety plants exploiting the analogical telephone network;
- the first logic unit 12 which allows to convert analogical signals, including signals typical of analogical modems, into digital ones and transmit them through the most proper connection channel 13.
   Figure 3 highlights that, preferably but not necessarily, the second simulation and conversion interface 6 comprises in turn:
- modulation/demodulation means, on the whole indicated with 17, electrically connected through a communications port 14, such as a direct or simulated serial port, an USB port or an Ethernet port, with the remote management centre 8;
- a second logic control and processing unit 15, electrically connected upstream with the modulation/demodulation means 17 and downstream with the digital communication networks 4: the second logic unit 15 converts digital signals into analogical signals and vice versa;
- a plurality of second connection terminals 16, interfaced with the respective digital communication networks 4.

Particularly, in the specific case the modulation/demodulation means 17 include an analogical modem, interposed between the second logic control and processing 15 and the remote management centre 8, or alternatively, such modulation/demodulation means could include a simulator of analogical modem integrated into the second logic control and processing unit.

The software of the remote management centre 8 is not absolutely modified compared to that one currently used for the transmission of signals through the general analogical telephone network (PSTN) since, as mentioned above, it sees an analogical modem connected with the PC into which is installed and behaves normally: hence, it is not necessary to modify the software of the remote management centre 8.

The digital communication networks 4 include the communications carriers selected from the group consisting of UMTS, HSDPA, GPRS, GSM, EDGE, SMS network, IP, data network, data channel, WiFi network and the like.

In a preferred although not binding manner, the first control and processing unit 12 includes encryption means, not shown, of the analogical signals transmitted, operatively connected with the detection and signalling device 2, suitable to prevent cloning by means of external drives which feign the detection and signalling device 2 in order to ensure the confidential nature of the information transmitted through the digital communication networks 4.

It is stated precisely that the first and second simulation and conversion interfaces 5, 6 are programmable and updatable by means of telecommunication channel: it follows that all the operative parameters of these interfaces 5, 6 can be remotely programmed and modified and their operating firmware can be completely updated or changed by means of telecommunication channel without physically going to the place where the detection and signalling device 2 is installed.

As far as transmission of the analogical signals coming from detection and signalling device 2 is concerned, the alarm plant sees the first interface 5 as if it were the traditional analogical telephone line: all the alarms are, then, transmitted to such a first interface 5, which subsequently transmits these signals using GSM networks in the various available modes (data channel, SMS, GPRS, EDGE, UMTS, HSDPA), wireless data networks, wired data networks, wired IP networks.

In addition, the first simulation and conversion interface 5 sends to the operative safety centre 7, with programmable frequency, one or more encrypted control communications whose timing of arrival is compared with set times in order to allow to the operative safety centre 7 itself supervision of the availability of the detection and signalling device 2 to transmit.

As said, integral part of the invention is also a method for the remote management and control of safety plants.

The method of the invention includes the following operations:
- providing the detection and signalling device 2 in a structure to be protected;
- providing the operative management and safety means 3 at a prefixed distance from the detection and signalling device 2;
- establishing a communication between the operative management and safety means 3 and the detection and signalling device 2 through the transmission by the detection and signalling device 2 of one or more analogical information signals to the management and safety means 3 and/or the transmission by means of the operative management and safety means 3 of one or more analogical control signals to the detection and signalling device 2.

In accordance with the invention, the method includes the following steps in the order:
- simulating the transmission to an analogical line of the analogical signals coming from the detection and signalling device 2 and/or operative management and safety means 3;
- converting the analogical signals into digital signals;
- routing the digital signals through the digital communication networks 4;
- converting the digital signals into analogical signals;
- transmitting the analogical signals to the operative management and safety means 3 and/or detection and signalling device 2.

Advantageously, the method of the invention comprises the operation of encrypting the analogical signals transmitted by the detection and signalling device 2 in order to prevent cloning by means of external drives which feign the detection and signalling device 2 and thereby ensure the confidential nature of the information transmitted through the digital communication networks 4.

On the basis of the foregoing, it is understood, therefore, that the remote management and control system of safety plants, object of the present invention, reaches the purposes and achieves the advantages mentioned above.

The remote management and control system of safety plants of the invention, thanks to its ability to transmit signals through one or more digital communication networks, ensures high reliability and continuous connectivity control.

In execution phase, changes could be made to the remote management and control system of the invention consisting, for example, in a number of detection and signalling device greater than one, used as reference way for the elaboration of the present description.

In the invention, then, the operation is bi-directional on one or more digital communication networks and can be originated from any of the two terminations (detection and signalling device and management and safety means, in particular remote management or tele-management centre).

The remote management and control system of the invention also comprise simulation and conversion interfaces with transmission capacity on multiple digital communication networks in order to get alternative routes of transmission of the alarms if one of them is missing or masked.

However, in further executive embodiments of the invention, the remote management and control system might include a number of digital communication networks usable in different from that one shown in the drawings that follow, that number could vary starting from one depending on the constructive choices and/or installation requirements; it is evident that the number of the first connection terminals and second connection terminals, respectively of the first interface and second interface, will vary accordingly.

With the same principle previously described, the system of the invention could be, moreover, adapted to transmit in bi-directional way on new communication networks, if and when they will be made available in the future.

It is understood that the remote management and control system here claimed could provide that the management and safety means are available to the same operator or to separate operators, such as the operator of the operative safety exchange and the installer of the safety plant.

It is stated precisely that the remote management and control system and method of the invention could be combined with any safety plant, such as typically an alarm system, a sprinkler system, a closed circuit television system and so on.

It is finally clear that many other variations may be made to the remote management and control system in question, without departing from the principle of novelty intrinsic in the inventive idea expressed here, as it is clear that, in the practical implementation of the invention, materials, shapes and sizes of the illustrated details can be changed, as needed, and replaced with others technically equivalent.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Remote management and control system (1) of safety plants including:
- at least one detection and signalling device (2) suitable to be combined with a structure to be protected;
- operative management and safety means (3), placed at a prefixed distance from said detection and signalling device (2) and suitable to communicate with said detection and signalling device (2) receiving one or more analogical information signals and/or transmitting one or more analogical control signals,
**characterized in that** it comprises at least one digital communication network (4) connecting said detection and signalling device (2) with said management and safety means (3) through at least one first simulation and conversion interface (5), interposed between said detection and signalling device (2) and said digital communication network (4), and at least one second simulation and conversion interface (6), interposed between said digital communication network (4) and said management and safety means (3), said first and second interfaces (5, 6) converting said analogical signals into digital signals and vice versa so as to allow a bi-directional communication between said detection and signalling device (2) and said management and safety means (3) through said digital network communication (4).

2. System (1) as claim 1) **characterized in that** said operative management and safety (3) means include:
- at least one operative safety exchange (7) suitable to communicate with said detecting and signalling device (2) receiving one or more analogical alarm signals;
- at least one remote management centre (8), operatively connected with said operative safety exchange (7), suitable to communicate with said detection and signalling device (2) receiving one or more analogical information signals and/or transmitting one or more control signals.

3. System (1) as claim 1) or 2) **characterized in that** said operative safety exchange (7) includes a digital alarm receiver (9) suitable to receive said alarm signals converted into digital format coming from said detection and signalling device (2) and conveyed by said digital communication network (4).

4. System (1) as any of the preceding claims, **characterized in that** said first simulation and conversion (5) interface includes:
- a telephone line simulator (10), electrically connected through electrical cables (11) with detection and signalling device (2);
- a first logic control and processing unit (12), electrically connected upstream with said telephone line simulator (10) and downstream with said digital communication network (4), suitable to convert said analogical signals into said digital signals and vice versa;
- one or more first connection terminals (13), interfaced with said digital network communication (4).

5. System (1) as any of the claims from 2) to 4) **characterized in that** said second simulation and conversion interface (6) comprises:
- modulation/demodulation means (17), electrically connected through a communication port (14) with said remote management centre (8);
- a second logic control and processing unit (15), electrically connected upstream with said modulation/demodulation means (17) and downstream with said digital communication network (4), suitable to convert said digital signals into said analogical signals and vice versa;
- one or more second connecting terminals (16), interfaced with said digital communication network (4).

6. System (1) as any of the preceding claims **characterized in that** said digital communication network (4) includes any communication carriers selected from the group consisting of UMTS, HSDPA, GPRS, GSM, EDGE, SMS, IP, data network, data channel, WiFi network and the like.

7. System (1) as any of the claims from 4) to 6), **characterized in that** said first processing and control unit (12) comprises encryption means of said analogical signals transmitted, operatively connected with said detection and signalling device (2), suitable to avoid prevent cloning by means of external drives which feign said detection and signalling device (2) in order to ensure the confidential nature of the information transmitted through said digital communication network (4).

8. System (1) as any of the preceding claims, **characterized in that** said first and second simulation and conversion interfaces (5, 6) are programmable and updateable by means of telecommunication channel.

9. System (1) as any of the claims from 2) to 8), **characterized in that** said first simulation and conversion interface (5) transmits to said operative safety exchange (7), with programmable frequency, one or more encrypted control communications whose arrival timing is compared with set times in order to allow to said operative safety exchange (7) supervision of the availability of said detection and signalling device (2) to transmit.

10. Method for the remote management and control of safety plants comprising the following operations:
- providing a detection and signalling device (2) in a structure to be protected;
- providing operative management and safety means (3) at a prefixed distance from said detection and signalling device (2);
- establishing a communication between said operative management and safety means (3) and said detection and signalling device (2) through the transmission by said detection and signalling device (2) of one or more analogical information signals to said operative management and safety means (3) and/or transmission by said operative management and safety means (3) of one or more analogical control signals to said detection and signalling device (2), **characterized in that** it comprise the following operations in the order:
- simulating the transmission to an analogical line of said analogical signals coming from said detection and signalling device (2) and/or said operative management and safety means (3);
- converting said analogical signals into digital signals;
- routing said digital signals through at least one digital communication network (4);
- converting said digital signals into said analogical signals;
- transmitting said analogical signals to said operative management and safety means (3) and/or said detection and signalling device (2).

11. Method as claim 10) **characterized in that** it comprises the operation of encrypting said analogical signals transmitted by said detection and signalling device (2) in order to prevent cloning by means of external drives which feign said detection and signalling device (2) and ensure the confidential nature of the information transmitted through said digital communication network (4).
